# EUROPÄISCHE PATENTSCHRIFT

(11) **EP 1 204 578 B1**
(45) Veröffentlichungstag und Bekanntmachung des Hinweises auf die Patenterteilung: **15.10.2003**
(21) Anmeldenummer: 00949420.4
(22) Anmeldetag: 28.07.2000
(51) Int. Cl.: B65G 47/51

(54) **PUFFERVERFAHREN UND PUFFERANORDNUNG FÜR FLASCHEN IN EINER FLASCHENBEHANDLUNGSANLAGE**
BUFFER METHOD AND BUFFER ARRANGEMENT FOR BOTTLES IN A BOTTLE TREATMENT PLANT
PROCEDE TAMPON ET DISPOSITIF TAMPON DESTINES AUX BOUTEILLES D'UNE INSTALLATION DE TRAITEMENT DE BOUTEILLES

(30) Priorität: 04.08.1999 DE 29913237 U
(43) Veröffentlichungstag der Anmeldung: 15.05.2002
(73) Patentinhaber: AUTEFA automation GmbH, 86316 Friedberg (DE)
(72) Erfinder: HIRSCHEK, Herwig, D-86399 Bobingen (DE)
(74) Vertreter: Ernicke, Klaus Stefan
(86) Internationale Anmeldenummer: EP0007337
(87) Internationale Veröffentlichungsnummer: WO01010754

(56) Entgegenhaltungen:
- US-A- 5 304 027

## Beschreibung

Die Erfindung betrifft ein Pufferverfahren und eine Pufferanordnung für Flaschen in einer Flaschenbehandlungsanlage mit den Merkmalen im Oberbegriff des Verfahrens- und Vorrichtungshauptanspruchs.

Ein solches Pufferverfahren nebst Pufferanordnung sind aus der US-A-5,304,027 bekannt. In der dort gezeigten Flaschenbehandlungsanlage sind ein Flaschenerzeuger, hier eine Blasmaschine zur Herstellung von Kunststoffflaschen, eine Pufferanordnung für die Flaschen und eine Füllstation sowie eine Einpackstation hintereinander angeordnet und durch einen Flaschenförderer untereinander verbunden. Der Flaschenpuffer ist als Trommelspeicher ausgebildet und erlaubt es, die Flaschen vom Flaschenförderer auszuschleusen und zwischenzuspeichern. Der Trommelspeicher ist dabei direkt an den Flaschenförderer angeschlossen und kann am Umfang seiner drehbaren und angetriebenen Trommel mehrere Flaschenreihen in entsprechenden Haltern aufnehmen. Die Flaschen werden beim Puffern direkt vom Flaschenförderer auf den Trommelspeicher ausgeschleust und beim Entlagern auf umgekehrten Wege wiederum direkt an den Flaschenförderer übergeben.

In der Praxis ist es ferner bekannt, die verschiedenen Stationen einer Flaschenbehandlungsanlage, z.B. einen Flaschenerzeuger mit Blasmaschine, eine Füllstation, eine Etikettierstation und eine Einpackstation durch einen Flaschenförderer mit einer Überlänge zu verbinden. Der Flaschenförderer bildet durch seine Länge jeweils Pufferstrecken zwischen den einzelnen Stationen. Diese Anordnung ist sehr bau-, platz- und kostenaufwendig. Außerdem hat diese Flaschenbehandlungsanlage eine lange Anlaufzeit beim Einschalten und eine lange Auslaufzeit beim Ausschalten. Zudem ist das Puffervolumen eng begrenzt.

Aus der nachveröffentlichten DE-U-298 07 325 und DE-U- 298 18 434 sind Flaschenbehandlungsanlagen bekannt, bei denen die von einer Blasmaschine kommenden PET-Flaschen auf Zwischenträger unter Bildung von Flaschenlagen umgesetzt werden und dann mit diesen Zwischenträgern zu einem Zwischenlager oder gegebenenfalls zu einem Palettierer oder zu einer Füllanlage gebracht werden.

Es ist Aufgabe der vorliegenden Erfindung, eine bessere Pufferanordnung aufzuzeigen.

Die Erfindung löst diese Aufgabe mit den Merkmalen im Hauptanspruch.
Das erfindungsgemäße Pufferverfahren und die zugehörige Pufferanordnung haben den Vorteil, dass sie ein hohes Puffervolumen in Verbindung mit einer schnellen Verfügbarkeit bieten. Trotzdem belastet die Pufferanordnung nicht die Förderstrecken in der Flaschenbehandlungsanlage, so dass diese kurze Anlauf- und Ausschaltzeiten hat. Zudem ist die erfindungsgemäße Pufferanordnung wesentlich flexibler und gestattet verschiedene Reaktionsmöglichkeiten auf den Ausfall von Komponenten der Flaschenbehandlungsanlage.

Die erfindungsgemäße Pufferanordnung hat einen geringeren Platzbedarf und bezogen auf das Puffervolumen geringere Investitionskosten als die vorbekannten Lösungen. Insbesondere wird durch die Pufferanordnung auch der Platzbedarf der gesamten Flaschenbehandlungsanlage verringert.

Die Flaschen werden nur zum eventuellen Zwischenlagern auf die größeren Gebinde oder Zwischenträger umgesetzt. Dies spart erheblich Platz und vereinfacht das Handhaben der Flaschen im Lagerbereich. Innerhalb der Stationen oder auf dem Flaschenförderer werden die Flaschen hingegen einzeln oder in kleineren Gebinden transportiert, welche innerhalb der Stationen nicht stören und das Befüllen, Etikettieren und sonstige Behandeln der einzelnen Flaschen nicht behindern.

Die erfindungsgemäße Pufferanordnung läßt sich in neue Flaschenbehandlungsanlagen integrieren. Es ist aber auch möglich, die vorhandenen Flaschenbehandlungsanlagen nachzurüsten.

Weitere vorteilhafte Ausgestaltungen ergeben sich aus den Unteransprüchen.

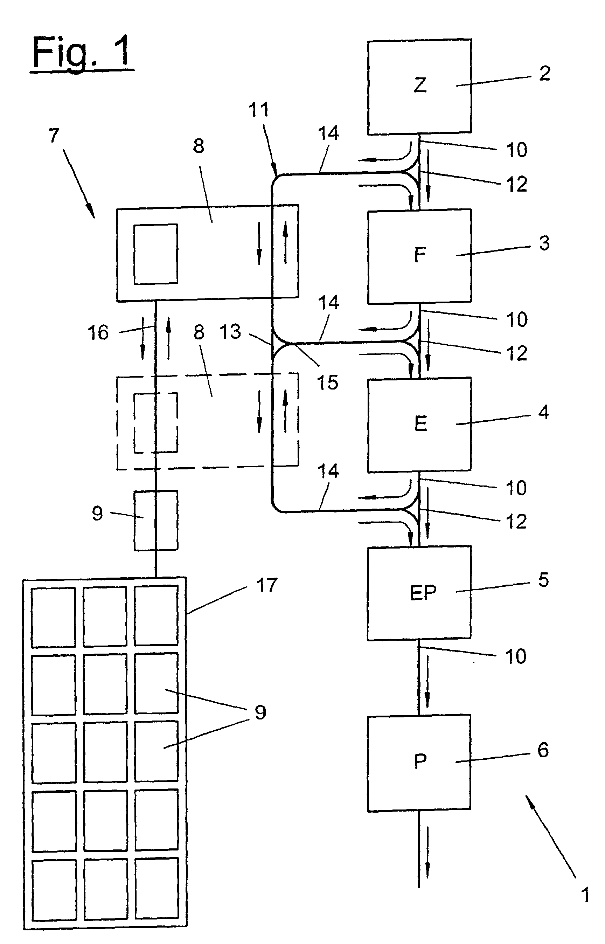

Die Erfindung ist in der Zeichnung Figur 1 in Form eines schematischen Anlagenplanes dargestellt. Es zeigt:
- Figur 1:: eine Flaschenbehandlungsanlage (1) mit einer Pufferanordnung (7).

Die Flaschenbehandlungsanlage (1) besteht aus mehreren, in einer Reihe hintereinander angeordneten Stationen (2,3,4,5,6), die durch einen Flaschenförderer (10) in einer Hauptlinie direkt miteinander verbunden sind. Auf dem Flaschenförderer (10) werden die Flaschen (18) vorzugsweise einzeln oder in kleineren Gebinden befördert. Die Kleingebinde können z.B. gemäß der EP-A-0 291 674 aus kastenförmigen Haltern bestehen, die jeweils eine Flasche im Klemmschluss halten und die sich zu einer Halterreihe zusammenstecken und verbinden lassen. Die Stationen (2) stehen vorzugsweise in kurzen Abständen hintereinander und haben zwischen sich nur kurze und direkte Förderstrecken.

Am Eingang der Flaschenbehandlungsanlage (1) befindet sich eine Zuführstation (2). Diese kann unterschiedlich ausgebildet sein. Sie kann z.B. aus einer Blasmaschine für Kunststofflaschen, z.B. PET-Flaschen, bestehen. Alternativ kann es sich auch um einen Auspacker handeln, der Neuglas oder Retourglas entpalettiert und auspackt. An die Zuführstation (2) schließt sich beispielsweise direkt eine Füllstation (3) an, in der die Flaschen (18) befüllt werden. Die können hier gegebenenfalls auch gereinigt, verschlossen, sterilisiert und in sonstiger Weise zusätzlich behandelt werden. Danach kann eine Etikettierstation (4) angeordnet sein, an die sich eine Einpackstation (5) anschließt, in der die Flaschen (18) in Kartons, Kunststoffkästen oder andere Behältnisse oder Gebinde verpackt werden. Am Ende der Linie befindet sich eine Palettierstation (6), von der aus das Palettierfüllgut nach außen abgegeben wird. Die Zahl, Ausbildung und Anordnung der Stationen (2,3,4,5,6) können beliebig variieren. Insbesondere kann die Behandlungsanlage (1) auch mehrere der schematisch dargestellten Linien haben.

Die Flaschenförderer (10) zwischen den Stationen (2,3,4,5,6) können in beliebig geeigneter Weise ausgebildet sein, z.B. als Luftförderer für vereinzelte PET-Flaschen, als Förderbänder, Rollgänge, oder dergleichen. Auf den verschiedenen Streckenabschnitten des Flaschenförderers (10) werden die Flaschen (18) oder Kleingebinde vorzugsweise in einer Reihe hintereinander transportiert. Alternativ können auch mehrere parallele Förderstränge vorhanden sein.

Die Pufferanordnung (7) besteht aus ein oder mehreren Umsetzern (8), die die in Reihen zugeführten Flaschen (18) lagenweise oder gruppenweise auf Zwischenträger oder sogenannte Trays (9) umsetzen. Dies sind große Gebinden, die eine Vielzahl von Flaschen (18) in sogenannten Flaschenlagen aufnehmen können. Die Umsetzer (8) sind über ein oder mehrere Trayförderer (16) mit ein oder mehreren Lagern (17) für die Trays (9) verbunden. Im Lager (17) können die Trays (9) mit den Flaschen (18) zwischengelagert und gepuffert werden.

Der oder die Umsetzer (8) sind vorzugsweise über einen eigenen Flaschentransporter (11) an den Flaschenförderer (10) der Hauptlinie über mindestens eine Weiche (12) angeschlossen. Alternativ kann ein Umsetzer (8) auch direkt am Flaschenförderer (10) oder auch direkt an mindestens einer Station (2,3,4,5,6) angeordnet sein.

In der gezeigten Ausführungsform ist ein Umsetzer (8) vorhanden, der ggf. mit einem zweiten Umsetzer (8) (gestrichelt gezeichnet) ergänzt werden kann. der Flaschentransporter (11) ist an drei Stellen über Weichen (12) an den Flaschenförderer (10) angeschlossen. Die Anschlußstellen befinden sich zwischen der Zuführstation (2) und der Füllstation (3) sowie zwischen der Füllstation (3) und der Etikettierstation (4) und zwischen der Etikettierstation (4) und der Einpackstation (5). An allen drei Punkten können über die vorzugsweise beidseitig arbeitende Weiche (12) die Flaschen (18) vom Flaschenförderer (10) auf den Flaschentransporter (11) ausgeschleust und umgekehrt auch wieder zurückgeschleust werden.

Die Weichen (12) können in beliebig geeigneter Weise ausgebildet sein. Ihre konstruktive Gestaltung hängt von der Art des Flaschenförderers (10) ab. Als Weiche (12) wird im Sinne der Erfindung jede Umlenk- oder Schleuseinheit verstanden, mit der die Flaschen (18) vom Flaschenförderer (10) zum Flaschentransporter (11) umgeleitet oder ausgeschleust werden können und andererseits auch vom Flaschentransporter (11) wieder zurück auf den Flaschenförderer (10) geleitet oder geschleust werden können. Pfeile geben in Figur 1 die verschiedenen Bewegungsmöglichkeiten für die Flaschen (18) an. Die Flaschen (18) selbst sind der Übersichtlichkeit wegen nicht dargestellt.

Der Flaschentransporter (11) kann je nach Art und Zahl der Anschlüsse am Flaschenförderer (10) unterschiedlich ausgebildet sein. In der gezeigten Ausführungsform hat der Flaschentransporter (11) einen beispielsweise parallel zum Flaschenförderer (10) sich erstreckenden Sammler (13), an dem auch ein oder beide Umsetzer (8) angeordnet sind. Auf den Sammler (13) gelangen die Flaschen (18) über Anschlußstrecken (14), die mit den Weichen (12) verbunden sind. In der gezeigten Ausführungsform sind drei Anschlußstrecken (14) vorhanden. Die obere und untere Anschlußstrecken (14) münden direkt in den Sammler (13).

Die mittlere Anschlußstrecke (14) ist über eine ebenfalls beidseitig arbeitende Weiche (15) an den Sammler (13) angeschlossen. Dies ist vor allem bei der Anordnung des zweiten Umsetzers (8) von Vorteil. Über die Weiche (15) können die Flaschen (18) wahlweise zum oberen oder unteren Abschnitt des Sammlers (13) befördert werden und umgekehrt auch wahlweise vom oberen oder unteren Sammlerabschnitt auf die mittlere Anschlußstrecke (14) gelangen. Auf dem Flaschentransporter (11) werden die Flaschen (18) wiederum in beliebig geeigneter Weise und ähnlich oder gleich wie auf dem Flaschenförderer (10) in Reihen hintereinander transportiert.

Die Umsetzer (8) können in beliebig geeigneter Weise ausgebildet sein. Sie setzen die in ein oder mehreren parallelen Reihen vom Flaschentransporter (11) zugeführten Flaschen (18) auf die Trays (9) um. Die Trays (9) nehmen mehrere Flaschenreihen unter Bildung einer Flaschengruppe oder Flaschenlage auf. In der bevorzugten Ausführungsform sind die Umsetzer und die Trays (9) entsprechend der DE-U-297 07 324 ausgebildet.

Der Umsetzer (8) hat eine Greifeinrichtung mit ein oder mehreren Reihengreifern für jeweils eine Flaschenreihe. Die Greifeinrichtung hat zudem eine Hubeinrichtung und mindestens eine Fahrachse, mit der sie sich quer zum Sammler (13) und zwischen dem Trayförderer (16) und dem Sammler (13) hin- und herbewegen kann. Beim Umsetzen werden die Flaschen (18) vorzugsweise im Kopfbereich ergriffen, angehoben, querverfahren und dann auf den Trays (9) abgesetzt. Bei der Rückführung der Flaschen (18) von den Trays (9) auf den Flaschentransporter (11) findet der Umsetzvorgang umgekehrt statt. Die Trays (9) bestehen aus schalenförmigen Behältern, die vorzugsweise einen glatten Boden und drei oder vier umlaufende hochstehende Wände haben. Durch den glatten Boden können unterschiedliche Flaschenformate aufgenommen werden. Alternativ können die Trays (9) spezielle Flaschenführungen in Form von Pins am Boden und Führungsrändern an den seitlichen Wänden haben. Die Trays (9) können aus beliebig geeigneten Werkstoffen, z.B. Blech oder Kunststoff bestehen.

Das Lager (17) kann ebenfalls in beliebig geeigneter Weise, z.B. als Regallager ausgebildet sein. Es nimmt die mit Flaschen (18) beladenen Trays (9) auf und kann auch leere Trays (9) speichern. Das Lager (17) hat geeignete Regalbediengeräte oder dergleichen und eine geeignete Steuerung mit Software zur Lagerverwaltung. Die Lagerverwaltung speichert die zu den einzelnen Trays und den dort befindlichen Flaschen (18) gehörigen Informationen über die Ausschleusstelle, die Flaschenart und den Flaschenzustand. Hierdurch ist feststellbar, ob die eingelagerten Flaschen (18) leer oder gefüllt sind, oder ob sie auch schon ein Etikett tragen. Entsprechend dieser Informationen können die im Lager (17) zwischengepufferten Flaschen (18) dann wieder an geeigneter Stelle in die Flaschenbehandlungsanlage (1) zurückgeschleust werden.

Die Pufferanordnung (7) ist parallel zur Flaschenbehandlungsanlage (1) angeordnet und wird bei Bedarf, insbesondere bei Störung oder Ausfall einer Station (2,3,4,5,6) aktiviert. Wenn beispielsweise die Füllstation (3) eine Störung hat, werden die Flaschen (18) zwischen der Zuführstation (2) und der Füllstation (3) über die erste Anschlußstrecke (14) ausgeschleust, vom oberen Umsetzer (8) auf Trays (9) umgesetzt und mit diesen im Lager (17) gepuffert. Sobald die Störung an der Füllstation (3) behoben ist, kehren die Flaschen (18) auf dem gleichen Weg über den Umsetzer (8) und die obere Anschlußstrecke (14) wieder zurück und werden der Füllstation (3) wieder zugeführt. Auf diese Weise kann bei einer Störung der Füllstation (3) die Zuführstation (2) und insbesondere eine dort angeordnete Blasmaschine kontinuierlich weiterarbeiten, wobei die produzierten Flaschen (18) mit ausreichendem Puffervolumen und ggf. über eine längere Zeit zwischengespeichert werden können.

Ähnlich verhält es sich, wenn die Etikettierstation (4) ausfällt. Die Flaschen (18) werden dann vor dieser Station (4) aus über die mittlere Anschlußsstrecke (14) geleitet und zum oberen Umsetzer (8) befördert. Wenn andererseits die Einpackstation (5) ausfällt, werden die Flaschen (18) vor dieser Station (5) über die untere Anschlußstrecke (14) ausgeschleust und zum oberen Umsetzer (8) transportiert. In beiden Fällen erfolgt die Rückfuhr der Flaschen (18) auf umgekehrtem Wege. Bei einem Ausfall der Etikettierstation (4) oder der Einpackstation (5) können die Zuführstation (2) und die Füllstation (3) und ggf. auch die Etikettierstation (4) ungehindert weiterarbeiten, wobei die befüllten und ggf. auch schon etikettierten Flaschen (18) im Lager (17) zwischengespeichert werden.

Die Pufferanordnung (7) gestattet es außerdem, einen gewissen Pufferbestand in Vorrat zu halten. Dabei werden beispielsweise bei Anlauf der Flaschenbehandlungsanlage (1) Vorratschargen von befüllten Flaschen (18) und ggf. auch von befüllten und etikettierten Flaschen (18) ausgeschleust und im Lager (17) vorsorglich zwischengespeichert. Wenn dann im Betrieb die Füllstation (3) ausfällt, können einerseits die leeren Flaschen (18) von der Zuführstation (2) ausgeschleust und zwischengespeichert werden. Andererseits können zugleich aber auch die zwischengespeicherten Vorratschargen hinter der Füllstation (3) wieder eingeschleust werden. Befüllte und noch nicht etikettierte Flaschen (18) werden der Etikettierstation (4) zugeführt, während befüllte und etikettierte Flaschen (18) der Einpackstation (5) zugeleitet werden können. Durch diese Vorratschargen können die hinter der ausgefallenen Station befindlichen Stationen der Flaschenbehandlungsanlage (1) trotzdem noch weiterarbeiten, wodurch ein weitgehend konstanter Auslauf der Flaschenbehandlungsanlage (1) sichergestellt ist.

Ähnlich verhält sich der Fall, wenn die Etikettierstation (4) ausfällt. In diesem Fall werden zum einen frisch befüllte Flaschen (18) im Lager (17) zwischengespeichert und gleichzeitig dort bevorratete, befüllte und bereits etikettierte Flaschen (18) wieder ausgelagert und der Einpackstation (5) zugeführt.

Wie in den vorgenannten Fällen mit gleichzeitiger Einlagerung und Auslagerung empfiehlt sich die Anordnung von mindestens zwei Umsetzern (8), von denen der eine die Einlagerung und der andere die Auslagerung übernimmt. Je nach Geschwindigkeitsniveau der Flaschenbehandlungsanlage können die Umsetzer (8) dann auch getrennte Trayförderer (16) und ggf. auch getrennte Lager (17) aufweisen.

Abwandlungen der gezeigten Ausführungsform sind in verschiedener Weise möglich. Beispielsweise kann die gezeigte Pufferanordnung (7) mehrere Linien einer Flaschenbehandlungsanlage (1) bedienen und ggf. miteinander verknüpfen. Über einen auf beide Linien arbeitenden Umsetzer können dann bei Ausfall einer Station Flaschen (18) von der einen Linie auf die andere Linie umgesetzt und dort eingeschleust werden, sofern es sich um gleiche Produkte handelt.

In weiterer Abwandlung ist es möglich, die Pufferanordnung (7) nur an ein oder zwei Stellen an den Flaschenförderer (10) der Hauptlinie anzuschließen. Hierbei wird der Puffereinsatz nur auf die Station oder Stationen mit der größten Ausfallwahrscheinlichkeit beschränkt. In einer weiteren Variation können über ggf. andere geeignete Trays (9) auch die Gebinde (Kartons, Kästen oder dergleichen) hinter der Einpackstation (5) über einen ggf. eigenständigen Umsetzer ausgeschleust und im vorhandenen Lager (17) oder einem anderen Lager zwischengespeichert und gepuffert werden.

Ferner sind noch weitere Funktionsvarianten möglich. Als Vorsorge für einen Ausfall der Zuführstation (2) und insbesondere einer dort befindlichen Blasmaschine können bei Anlauf oder in Betrieb der Flaschenbehandlungsanlage (1) Vorratschargen von leeren Flaschen (18) im Lager (17) gepuffert werden, die dann bei einem Ausfall der Zuführstation (2) der Füllstation (3) zur Aufrechterhaltung des Linienbetriebes wieder zugeführt werden. Ferner ist es möglich, bei Ausfall einer der hinteren Stationen die Flaschen (18) an einer beliebigen vorgeschalteten Station auszuschleusen. Mit der Pufferanordnung (7) kann auch auf einen gleichzeitigen Ausfall mehrerer Stationen in entsprechender Weise reagiert werden. Dies gilt insbesondere, wenn im Lager (17) unterschiedliche Vorratschargen mit leeren Flaschen, befüllten Flaschen (18) und befüllten sowie etikettierten Flaschen (18) zwischengespeichert werden.

### BEZUGSZEICHENLISTE

- 1: Behandlungsanlage
- 2: Zuführstation, Blasmaschine, Auspacker (Z)
- 3: Füllstation (F)
- 4: Etikettierstation (E)
- 5: Einpackstation (EP)
- 6: Palettierstation (P)
- 7: Pufferanordnung
- 8: Umsetzer
- 9: Zwischenträger, Tray
- 10: Flaschenförderer, Hauptlinie
- 11: Flaschentransporter
- 12: Weiche
- 13: Sammler
- 14: Anschlußstrecke
- 15: Weiche
- 16: Trayförderer
- 17: Lager
- 18: Flasche

## Patentansprüche

1. Verfahren zum Puffern von Flaschen (18) in einer Flaschenbehandlungsanlage (1) mit mehreren Stationen (2,3,4,5,6), insbesondere einer Zuführstation (2), einer Füllstation (3) mit Etikettierstation (4) und einer Einpackstation (5), die durch einen Flaschenförderer (10) untereinander verbunden sind, wobei die Flaschen (18) an oder zwischen den Stationen (2,3,4,5,6) an ein oder mehreren Stellen vom Flaschenförderer (10) ausgeschleust und in mindestens einem Lager (17) zwischengespeichert werden, **dadurch gekennzeichnet,dass** die Flaschen (18) vor dem Einlagern mit mindestens einem Umsetzer (8) auf ein oder mehrere bewegliche Zwischenträger (9) lagenweise umgesetzt und mit dem Zwischenträger (9) im Lager (17) eingelagert werden.

2. Verfahren nach Anspruch 1, **dadurch gekennzeichnet, dass** die Flaschen (18) zum Auslagern durch die Umsetzer (8) vom Zwischenträger (9) entnommen, vereinzelt und am Flaschenförderer (10) wieder eingeschleust werden.

3. Pufferanordnung für Flaschen (18) in einer Flaschenbehandlungsanlage (1) mit mehreren Stationen (2,3,4,5,6), insbesondere einer Zuführstation (2), einer Füllstation (3) mit Etikettierstation (4) und einer Einpackstation (5), die durch einen Flaschenförderer (10) untereinander verbunden sind, wobei die Pufferanordnung (1) mindestens ein Lager (17) aufweist, welches mit dem Flaschenförderer (10) und/oder mit ein oder mehreren Stationen (2,3,4,5) verbindbar ist, **dadurch gekennzeichnet, dass** die Pufferanordnung (7) mindestens einen Umsetzer (8) und mehrere bewegliche Zwischenträger (9) für die lagenweise Aufnahme von Flaschen (18) sowie mindestens ein Lager (17) für die Zwischenträger (9) aufweist, wobei der Umsetzer (8) mit dem Flaschenförderer (10) und/oder mit ein oder mehreren Stationen (2,3,4,5) verbindbar ist.

4. Pufferanordnung nach Anspruch 3, **dadurch gekennzeichnet , dass** die Pufferanordnung (7) einen Flaschentransporter (11) aufweist, der über mindestens eine Weiche (12) an mindestens einer Stelle an den Flaschenförderer (10) der Behandlungsanlage (1) anschließbar ist.

5. Pufferanordnung nach Anspruch 3 oder 4, **dadurch gekennzeichnet, dass** der Flaschentransporter (11) mehrere mit dem Flaschenförderer (10) verbundene Anschlussstrecken (14) aufweist, die ihrerseits ggf. über eine Weiche (15) an einen gemeinsamen Sammler (13) angeschlossen sind.

6. Pufferanordnung nach einem der Ansprüche 3 bis 5, **dadurch gekennzeichnet, dass** die Weichen (12,15) zweiseitig zum Ein- und Ausschleusen der Flaschen (18) ausgebildet ist.

7. Pufferanordnung nach einem der Ansprüche 3 bis 6, **dadurch gekennzeichnet, dass** der oder die Umsetzer (8) am Sammler (14) angeordnet ist oder sind.

8. Pufferanordnung nach einem der Ansprüche 3 bis 7, **dadurch gekennzeichnet, dass** die Pufferanordnung (7) mindestens einen Trayförderer (16) zwischen Umsetzer (8) und Lager (17) aufweist.

## Claims

1. Method for buffering bottles (18) in a bottle treatment plant (1) with several stations (2, 3, 4, 5, 6), in particular a feed station, a filling station (3) with labelling station (4) and a packing station (5), connected to one another by a bottle conveyor (10), wherein the bottles (18) are filtered out at or between the stations (2, 3, 4, 5, 6) at one or more points of the bottle conveyor (10) and intermediately stored in at least one storage area (17), **characterised in that** the bottles (18) are transferred in layers before storing by at least one transfer device (8) on to one or more mobile intermediate carriers (9) and are stored with the intermediate carrier (9) in the storage area (17).

2. Method according to claim 1, **characterised in that** for removal from storage the bottles (18) are taken from the intermediate carrier (9) by the transfer device (8), separated and filtered back on to the bottle conveyor (10).

3. Buffer arrangement for bottles (18) in a bottle treatment plant (1) with several stations (2, 3, 4, 5, 6), in particular a feed station (2) a filling station (3) with labelling station (4) and a packing station (5), connected to one another by a bottle conveyor (10), wherein the buffer arrangement (1) has at least one storage area (17), which can be connected to the bottle conveyor (10) and/or to one or more stations (2, 3, 4, 5), **characterised in that** the buffer arrangement (7) has at least one transfer device (8) and several mobile intermediate carriers (9) for receiving bottles (18) in layers and at least one storage area (17) for the intermediate carriers (9), wherein the transfer device (8) can be connected to the bottle conveyor (10) and/or to one or more of the stations (2, 3, 4, 5).

4. Buffer arrangement according to claim 3, **characterised in that** the buffer arrangement (7) has a bottle transporter (11), which can be connected via at least one switch point (12) to at least one point on the bottle conveyor (10) of the treatment plant (1).

5. Buffer arrangement according to claim 3 or 4, **characterised in that** the bottle transporter (11) has several connection sections (14) connected to the bottle conveyor (10), which on their part are, if necessary, connected via a switch point (15) to a common collector (13).

6. Buffer arrangement according to one of claims 3 to 5, **characterised in that** the switch points (12, 15) are constructed on two sides for filtering the bottles (18) on and off.

7. Buffer arrangement according to one of claims 3 to 6, **characterised in that** the transfer device(s) (8) is or are arranged on the collector (14).

8. Buffer arrangement according to one of claims 3 to 7, **characterised in that** the buffer arrangement (7) has at least one tray conveyor (16) between transfer device (8) and storage area (17).

## Revendications

1. Procédé de stockage de bouteilles (18) dans une installation (1) de manipulation de bouteilles ayant plusieurs postes (2, 3, 4, 5, 6), notamment un poste (2) d'amenée, un poste (3) de remplissage ayant un poste (4) d'étiquetage et un poste (5) d'emballage, qui sont reliés entre eux par un convoyeur (10) à bouteilles dans lequel on sort les bouteilles (18) en les postes (2, 3, 4, 5, 6) ou entre eux en un ou en plusieurs points du convoyeur (10) à bouteilles, et on les emmagasine intermédiairement dans au moins un magasin (17), **caractérisé en ce que** l'on déplace couche par couche les bouteilles (18) avant l'emmagasinage par au moins un changeur (8) en les mettant sur un ou sur plusieurs supports (9) intermédiaires mobiles et on les emmagasine avec le support (9) intermédiaire dans le magasin (17).

2. Procédé suivant la revendication 1, **caractérisé en ce que** l'on retire les bouteilles (18) pour les sortir du magasin par le changeur (8) du support (9) intermédiaire, on les individualise et on les entre à nouveau sur le convoyeur (10) à bouteilles.

3. Dispositif de stockage de bouteilles (18) dans une installation (1) de manipulation de bouteilles ayant plusieurs postes (2, 3, 4, 5, 6), notamment un poste (2) d'amenée, un poste (3) de remplissage ayant un poste (4) d'étiquetage et un poste (5) d'emballage, qui sont reliés entre eux par un convoyeur (10) à bouteilles, le dispositif (1) de stockage ayant au moins un magasin (17) qui peut être relié au convoyeur (10) à bouteilles et/ou à un ou à plusieurs postes (2, 3, 4, 5), **caractérisé en ce que** le dispositif (7) de stockage a au moins un changeur (8) et plusieurs supports (9) intermédiaires mobiles pour la réception couche par couche de bouteilles (18) ainsi qu'au moins un magasin (17) pour les supports (9) intermédiaires, le changeur (8) pouvant être relié au convoyeur (10) à bouteilles et/ou à un ou à plusieurs postes (2, 3, 4, 5).

4. Dispositif de stockage suivant la revendication 3, **caractérisé en ce que** le dispositif (7) de stockage comprend un transporteur (11) à bouteilles qui peut être raccordé par au moins un aiguillage (12) à au moins un point du convoyeur (10) à bouteilles de l'installation (1) de manipulation.

5. Dispositif de stockage suivant la revendication 3 ou 4, **caractérisé en ce que** le transporteur (11) à bouteilles comprend plusieurs zones (14) de raccordement reliées au convoyeur (10) à bouteilles et raccordés de leur côté le cas échéant par un aiguillage (15) à un collecteur (13) commun.

6. Dispositif de stockage suivant l'une des revendications 3 à 5, **caractérisé en ce que** les aiguillages (12, 15) sont constitués sur les deux côtés pour l'entrée et la sortie des bouteilles (18).

7. Dispositif de stockage suivant l'une des revendications 3 à 6, **caractérisé en ce que** le changeur (8) ou les changeurs (8) est ou sont placé(s) sur le collecteur (14).

8. Dispositif de stockage suivant l'une des revendications 3 à 7, **caractérisé en ce que** le dispositif (7) de stockage comprend au moins un convoyeur (16) à plateau entre le changeur (8) et le magasin (17).
